(19) Europäisches Patentamt
European Patent Office
Office européen des brevets

(11) **EP 1 471 694 B1**

(12) **EUROPEAN PATENT SPECIFICATION**

(45) Date of publication and mention
of the grant of the patent:
**05.03.2008 Bulletin 2008/10**

(51) Int Cl.:
*H04L 12/56* (2006.01)    *H04L 29/06* (2006.01)

(21) Application number: **03009465.0**

(22) Date of filing: **25.04.2003**

(54) **Method for dimensioning bandwidth in voice-over-IP networks**

Verfahren zur Bestimmung der Bandbreite in Sprache-über-IP Netzwerken

Procédé de dimensionnement d'un largeur de bande dans réseaux de voix-sur-IP

(84) Designated Contracting States:
**DE FR GB IT SE**

(43) Date of publication of application:
**27.10.2004 Bulletin 2004/44**

(73) Proprietor: **SIEMENS AKTIENGESELLSCHAFT**
**80333 München (DE)**

(72) Inventors:
• **Sharafeddine, Sanaa**
**80333 München (DE)**
• **Riedl, Anton**
**23602 Newport News (US)**
• **Totzke, Jürgen**
**85586 Poing (DE)**

(56) References cited:
**US-A- 5 883 819        US-B1- 6 266 322**

**Description**

Today's computer networks were originally designed to support a single type of service treating all kinds of traffic as belonging to one traffic class. However, with ongoing convergence of information technology and telecommunications, new applications are evolving, which generate traffic with various characteristics and which also demand different Quality of Service (QoS) criteria. Thus, the existing IP (Internet Protocol) network architecture needs to be upgraded in order to support a variety of services ranging from non-real-time traffic such as ftp and email to real-time traffic such as interactive voice and video.

Over the past years, several technologies and mechanisms have been developed, which allow the realization of QoS-enabled multi-service networks. One fundamental prerequisite for these types of networks is the capability to differentiate between packets of different traffic streams and to forward the packets appropriately, each with the desired Quality of Service. This requires that for the various traffic streams, separate queues are set up within network nodes, which are then served according to a certain scheduling scheme. Doing so, each traffic stream receives a certain share of the available bandwidth, which if insufficient leads to quality degradation. The two most important Quality of Service frameworks specified by the IETF (Internet Engineering Task Force)- "Integrated Services" (IntServ) and "Differentiated Services" (DiffServ) - rely on the capability of packet differentiation. In the "Integrated Services", traffic differentiation is proposed on a per-flow basis (i.e., on a very fine-granular basis), while the "Differentiated Services" suggests that only a few traffic classes be defined, which are then treated differently (i.e., differentiation on a traffic-aggregation basis). However, the proposed mechanisms can only achieve good Quality of Service if sufficient bandwidth is provisioned.

In the documents US 6,266,322 B1 and US 5,883,819 A different concepts are discussed for dimensioning a bandwidth or assessing a quality of service for data or multimedia traffic via a communications network. In there mainly an end-to-end analysis of a connection or an analysis of average transmission values are performed.

The characteristics of a traffic stream sent out by a voice over IP (VoIP) source are determined by the type of encoder, which is used to convert voice samples into IP-packets. The most common voice coders are constant bit rate (CBR) coders that transmit a fixed-size IP packet every constant interval of time. A G.711 coder, for example, might generate a 200-byte packet every 20 ms, resulting in data rate of 80 kbps.

For Voice over IP to become widely accepted, it will have to provide a quality level comparable to conventional telephony systems. One crucial factor for the perceived quality of voice communication is the end-to-end delay of voice samples between the speaker and the listener. In Voice over IP systems, this delay consists mainly of encoding and decoding delays as well as packet transfer times between the sender and the receiver. Furthermore, in order to equalize delay jitter, which arises from traffic variations within the network, a playback buffer is employed in the receiver. Incoming packets, whose interarrival times might vary, are temporarily stored and played out in equidistant time intervals, just as they were sent out by the original sender. This playback buffer time also contributes to the overall delay budget. Altogether, the one-way end-to-end delay value should be less than 150 ms for interactive voice communication.

Having a rather constant coder and playback buffer delay, one can derive a certain maximum threshold for the network delay.

Thus, for IP networks to be able to appropriately support Voice over IP services, network latency has to be kept lower than this threshold. As the main contribution to latency in IP networks is queuing delay, which occurs at network nodes during congestion phases, this delay component increases with each node. Thus, we can derive a certain per-node delay limit in a way that the total delay of the maximum number of nodes in the network is below the given threshold. Based on this per-node delay limit, the network links can be dimensioned.

The present invention is, therefore, directed to a method for dimensioning the required bandwidth of a network node's output line.

Generally described, the method comprises the steps of:

(a) computing a maximum waiting time corresponding to different worst cases at the node, whereby the different worst case szenarios are dependent on the constellation of arrivals of packets of a number of active voice connections,
(b) defining a delay threshold for the maximum waiting time,
(c) definding a propability, and
(d) dimensioning the bandwidth of the network node's output line in such a manner, that the delay threshold is not exceeded except in cases which occur as rare as the definded propability.

Using this dimensioning concept, in most cases (up to the defined propability) no packet has to wait more than the predefined dalay threshold. Only in a few "unfortunate" cases, the threshold is exceeded and that happens when more packets are present in the buffer of a network node than considered while dimensioning. The probabilities that such unfortunate cases happen can be evaluated based on simulations. As a result of the inventive dimensioning concept, the amount of required bandwidth can be drastically decreased (as compared to that required in hardly guaranteed Quality of Service) if only a very small percentage of all connections at all times are negatively affected.

In brief, providing hard performance guarantees to voice services is extremely costly as very high bandwidth rates are required in order to account for rare cases. By ignoring these rare cases, the amount of required bandwidth can be decreased significantly. Consequently, an almost guaranteed Quality of Service based on the inventive dimensioning strategy is achievable with rather low costs. In addition to capacity planning in IP networks, this dimensioning strategy could be used for call admission control as well to compute the total number of connections that could be supported with a given Quality of Service at one time.

According to an embodiment of the invention, different dimensioning algorithms are definded for different scheduling algorithms, e.g. for preemptive and non-preemptive priority queuing (PQ) or class-based weighted fair queuing (CB-WFQ).

According to another embodiment of the invention, in voice-only networks or networks using pre-emptive priority queuing, the bandwidth lies between L/D (according to a best case dimensioning strategy) and K·L/D (according to a worst case dimensioning strategy), whereby L is the packet length of a voice over IP packet, D is the delay theshold and K is the number of active voice connections.

Additional features and advantages of the present invention are described in, and will be apparent from, the following detailed description of the Invention and the Figures.

The figures show:

Fig. 1: a structogram for schematically illustrating the fundamental units of a voice over IP network;

Fig. 2: a diagram with the required link capacity for the two dimensioning approaches "worst-case dimensioning" and "best-case dimensioning";

Fig. 3: a diagram with the required link capacity assuming "$(K\text{-}i)$-packet worst-case dimensioning"; and

Fig. 4 a table with formulas for calculating a link capacity, which is needed to satisfy a certain per-node delay limit using (K-i)-packet worst-case dimensioning for different scheduling algorithms.

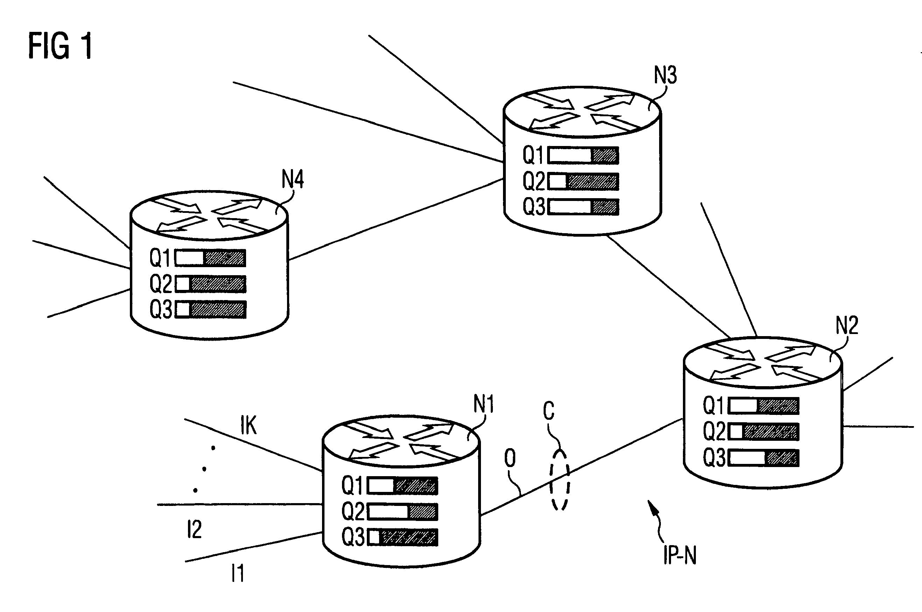

Fig. 1 shows a network IP-N with several nodes N1,...,N4, each of which supports a set of traffic classes by implementing separate queues Q1, Q2, Q3 per output port. In this invention, we consider all voice traffic to be treated as one class, giving it a separate queue Q1 while other queues Q2, Q3 may contain any other kind of traffic. In order to account for a general network model with various network topologies, traffic at every node N1,...,N4 is assumed to be independent from other nodes N1,...,N4.

In this example of the invention, we focus on node N1 and analyze the multiplexing process of several incoming lines I1,...,IK onto one outgoing line O. We assume that K voice connections are active and that the corresponding VoIP packets need to be forwarded onto the same outgoing line O with capacity $C$. The traffic of each voice connection 1,..., K is generated by a CBR encoder without silence suppression, i.e., packets of length $L$ are sent out with a periodicity of $T$ seconds, resulting in an average rate $r = L/T$. For simplification, we assume that the $K$ traffic streams reach the node N1 over different input lines I1,...,IK. This way, it is possible that $K$ incoming VoIP packets arrive at the node N1 at almost the same time and being instantaneously put into the output buffer. In any case, a threshold $D$ of the queuing delay at each node N1,...,N4 should not be exceeded by any of the voice packets. The maximum packet size of the other traffic classes traversing the router is assumed equal to the output line's O maximum transfer unit (MTU).

The scheduling algorithms used in the nodes N1,...,N4 are priority queuing (PQ) and class-based weighted fair queuing (CB-WFQ). Priority queuing assigns priority levels to the different queues Q1, Q2, Q3. Packets in a lower priority queue Q1, Q2, Q3 are not processed until all packets of higher priority queues Q1, Q2, Q3 are serviced and the corresponding output buffers are empty. A pre-emptive type of priority queuing aborts transmission of a lower priority packet upon the arrival of a higher priority one, whereas a non-pre-emptive priority queuing allows the completion of the transmission and finishes serving the lower-priority packet first. Priority queuing has been proposed as an adequate scheduling for the expedited forwarding per-hop behavior (EF-PHB), which grants premium service to a defined aggregate of traffic in the "Differentiated Services" model and has been introduced to support real-time critical traffic such as voice. Voice traffic is normally given the highest priority as it is also assumed in this invention. With priority queuing, it is possible that traffic classes with the highest priority take up the whole bandwidth and push out lower-priority traffic. Class-based weighted fair queuing is an alternative to priority queuing, which allocates a weight to each class or queue Q1, Q2, Q3 and shares the link capacity among the busy queues Q1, Q2, Q3 in direct proportion to their assigned weights. Thus, no traffic class is capable of seizing the whole link at congestion times.

Assuming that a maximum of $K$ VoIP connections are forwarded to one output line O, we need to find the output line's O necessary bandwidth that provides a certain Quality of Service. In this invention, Quality of Service is directly related to a certain queuing delay threshold $D$ at each node N1,...,N4. Furthermore, assuming that all VoIP sources implement the same encoders, $K$ packets (belonging to the $K$ connections) will arrive within any time interval $T$. During network operations, a call admission control scheme has to assure that not more than $K$ connections are allowed on the output line O. Otherwise, the required Quality of Service cannot be provided.

A first dimensioning approach is based on worst-case considerations, which give hard Quality of Service guarantees, i.e., all packets of the $K$ voice connections are definitely served within a delay threshold of $D$, irrespective of the load situation. Deterministic upper bounds on queuing delays in packet-switched,networks correspond to the case when $K$ IP packets arrive all at exactly the same time instance. It then has to be assured that the packet, which happens to be put into the buffer last and which has to wait longest, is still sent out within time $D$. Thus, $K \cdot L$ bytes have to be sent within $D$ requiring a rate of $K \cdot L/D$. This dimensioning concept, is referred to as worst-case dimensioning or hard-guaranteed dimensioning.

Instead of deterministic delay bounds, statistical delay values can be considered. Taking into account that the $K$ packets usually arrive in some way distributed over the time period $T$, a smaller bandwidth seems to be sufficient. This way, softer Quality of Service guarantees are given and the dimensioning strategy is referred to as average-case dimensioning or statistical-guaranteed dimensioning. However, one has to be aware that in some cases, not all of the packets can be serviced within the time threshold $D$ if statistical-guaranteed dimensioning is used.

The opposite extreme of worst-case dimensioning would be best-case dimensioning. This approach corresponds to a scenario where every packet arrives at the moment when the previous packet has just been sent out. Based on this scenario, the required capacity is at least $L/D$. In any case, the minimum required capacity is the mean rate of the $K$ connections.

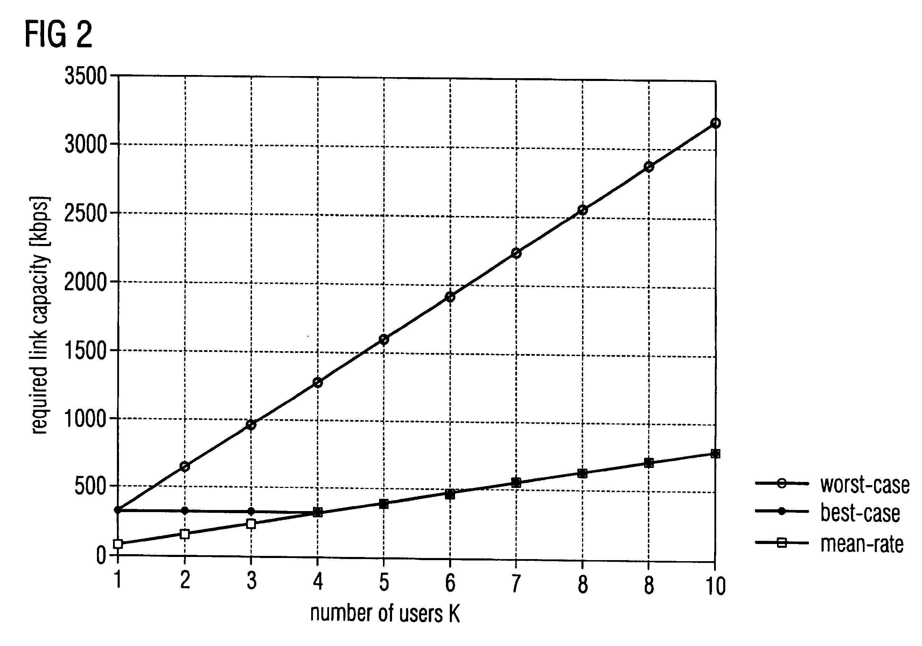

Fig. 2 illustrates the bandwidth range between the two extremes, worst-case dimensioning and best-case dimensioning, for $L$ = 200 bytes, $T$ = 20 ms, and $D$ = 5 ms. For each of these extreme expectations, the required link capacity is shown assuming that the network supports only voice services or employs pre-emptive priority queuing. As the number of connections or active users $K$ increases, the range gets broader. It is also shown that worst-case dimensioning requires rates much higher than the mean rate of the active users causing very low link utilization values, e.g., for $K$ = 10, the link utilization is 10-80/3200 = 0.25 = 25%. In contrary, best-case dimensioning starts slightly higher than the mean rate and then coincides with it at $K$ = 4, causing a 100% link utilization.

While best-case dimensioning certainly does not achieve satisfactory Quality of Service in most cases (too many active connections would exceed their delay budget), worst-case dimensioning is considered a highly pessimistic assumption. Here rises the question, how necessary it is to dimension according to the worst-case scenario and how frequent this case exists.

For the worst-case scenario, we assume a slotted time interval $T$ where each slot is equal to the service time of one packet. Packet arrivals occur at the beginning of a slot and are uniformly distributed over all available slots in the time interval $T$. Having periodic sources, only one packet per active connection appears every interval T. If link utilization is 100%, i.e. the number of users $K$ equals the number of time slots in $T$, the probability for the worst-case is

$$P_{\text{worst case}} = \frac{1}{K^{K-1}} \; .$$

Obviously, for lower link utilization, $P_{worst\,case}$ is even less. Setting $K$ = 10 users, $P_{worst\,case} \leq 10^{-9}$. Therefore, we would be wasting 75% of the link capacity (see Fig. 2) just to account for a case that occurs once every $10^9$ times. For comparison, the probability of the best-case scenario is computed with 100% utilization as:

$$P_{\text{best case}} = \frac{K!}{K^K} = P_{worst\,case} \cdot (K-1)! \; .$$

It evaluates much higher than $P_{worst\,case}$ for high $K$ values. Furthermore, for lower link utilization, $P_{best\,case}$ is even higher. Setting $K$ = 10, $P_{best\,case} \geq 3.6 \cdot 10^{-4}$. However, if dimensioning is done according to the best case, the desired Quality of Service would not be achieved in at most $(1 - 3.6 \cdot 10^{-4})$ of all cases. It is clear that dimensioning according to either extreme is not realistic. While one approach wastes a lot of bandwidth, the other one leads to service degradation of most voice connections. A practical satisfactory dimensioning strategy should lie somewhere in between.

We define a $(K\text{-}i)$-packet worst case where during a period $T$, for K active voice connections, the maximum number of packets in the buffer is $K\text{-}i$, with $i$ = 0, 1,...,$K$-1. In other words, the maximum waiting time over all packets is K-i times the individual service time. The last packet waits until (K-i-1) packets in front of it are serviced in addition to ist own service time. Therefore, the worst-case corresponds to $i$ = 0 and the best case corresponds to $i$ = $K$-1.

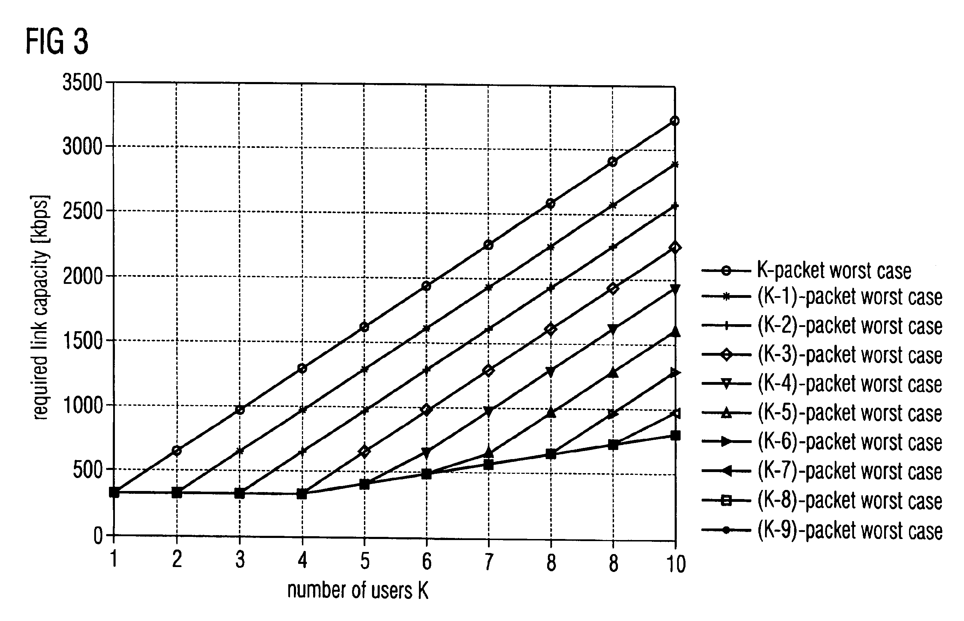

Fig. 3 shows the required link speeds for (K-i)-packet worst cases in voice-only networks or in network IP-N assuming that the used sceduling algorithm is pre-emtive priority queuing. If dimensioning is carried out according to the $(K\text{-}2)$-packet worst case, 20% of the bandwidth can be saved as compared to worst-case dimensioning, leading to service degradation only in $(K\text{-}0)$- and $(K\text{-}1)$-packet worst cases, which arise with a very low probability. In the network IP-N supporting several traffic classes, (*K-i*)-packet worst-case dimensioning depends on the employed scheduling scheme.

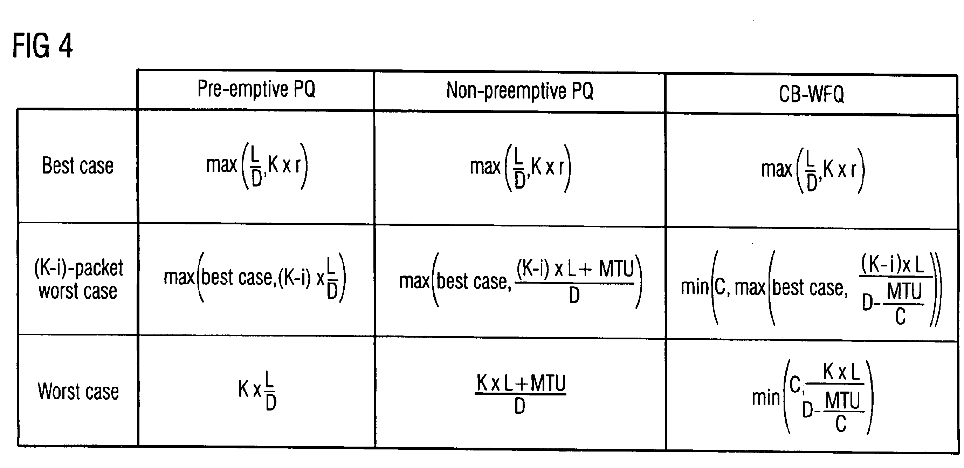

Fig. 4 shows a table with formulas for computing the link capacity and bandwidth share, respectively, which are needed to satisfy a certain per-node delay threshold *D* using (*K-i*)-packet worst-case dimensioning for priority queuing (PQ) and class-based weighted fair queuing (CB-WFQ). K is the number of active voice connections, L is the packet length, MTU is the maximum transfer unit, r is the voice coder rate at the Internet Protocol layer and C is the outgoing line's capacity.

For example the required bandwidth, if pre-emptive priority queuing is used as the scheduling algorithm, is

$$\max\left( best\ case, (k-i) \times \frac{L}{D} \right) \quad \text{with i = 0,...,K-1.}$$

The required bandwidth, if non-preemptive priority queing is used as the scheduling algorithm, is

$$\max\left( best\ case, \frac{(K-i) \times L + MTU}{D} \right) \quad \text{with i = 0,...,K-1.}$$

The required bandwidth, if class-based weighted fair queuing is used as the scheduling algorithm, is

$$\min\left( C, \max\left( best\ case, \frac{(K-i) \times L}{D - \frac{MTU}{C}} \right) \right) \quad \text{with i = 0,...,K-1.}$$

Whereby the required bandwidth, according to the best case dimensioning strategy, is

$$\max\left( \frac{L}{D}, K \times r \right) \quad \text{with i = 0,...,K-1.}$$

**Claims**

1.   Method for dimensioning the bandwidth of a node's output line (O) in a voice over IP network (IP-N) comprising the following steps:

(a) computing a maximum waiting time of packets within a buffer corresponding to different worst cases at the node (N1,...,N4), whereby the different worst case scenarios are dependent on the constellation of arrivals of packets of a number (K) of active voice connections,
(b) defining a delay threshold (D) for the maximum waiting time,
(c) defining a probability (P), and
(d) dimensioning the bandwidth of the network node's output line (O) in such a manner, that the delay threshold (D) is not exceeded except in cases which occur as rare as the defined probability (P).

2.   Method according to claim 1,
**whereby** for different scheduling algorithms (PQ, CB-WFQ) different dimensioning algorithms are defined.

**3.** Method according to claim 1 or 2,
**whereby** the bandwidth lies in between:

- max($L/D$, $Kxr)$ and $K{\times}L/D$ if pre-emptive priority queuing is used,
- max ($L/D$, $K{\times}r$) and ($K{\times}L+MTU$)/$D$ if non-pre-emptive priority queuing is used
- max ($L/D$, $K{\times}r$) and min ($C$, $K{\times}L/(D\text{-}MTU/C$)) if class-based weighted fair queuing is used

whereby

- L is the packet length of a voice over IP packet,
- r is the voice coder rate at the Internet Protocol layer,
- C is the link speed capacity of the IP network (IP-N),and
- MTU is the maximum transfer unit of the output line (O)

**4.** Method according to claim 1, 2 or 3,
**whereby** the calculated bandwidth is used for a call admission control.

**Patentansprüche**

**1.** Verfahren zum Bestimmen der Bandbreite der gehenden Leitung (0) eines Knotens in einem Sprache-über-IP-Netzwerk (IP-N), welches die folgenden Schritte umfasst:

(a) Berechnen einer maximalen Wartezeit der Datenpakete in einem Puffer entsprechend verschiedenen Worst-Case-Szenarien an dem Knoten (N1, ..., N4), wobei die verschiedenen Worst-Case-Szenarien von der Konstellation der Ankünfte von Datenpaketen einer Anzahl (K) von aktiven Sprachverbindungen abhängig sind,
(b) Definieren eines Verzögerungsgrenzwerts (D) für die maximale Wartezeit,
(c) Definieren einer Wahrscheinlichkeit (P), und
(d) Bestimmen der Bandbreite der gehenden Leitung (0) des Netzwerkknotens in einer solchen Art und Weise, dass der Verzögerungsgrenzwert (D) nicht überschritten wird außer in Fällen, die mit der Seltenheit der definierten Wahrscheinlichkeit (P) auftreten.

**2.** Verfahren gemäß Anspruch 1,
wobei für verschiedene Scheduling-Algorithmen (PQ, CB-WFQ) verschiedene Dimensionierungs-Algorithmen definiert werden.

**3.** Verfahren gemäß Anspruch 1 oder 2,
wobei die Bandbreite innerhalb folgender Grenzen liegt:

- max(L/D, K×r) und K×L/D, wenn vorausschauendes Priority Queuing (PQ) verwendet wird
- max(L/D, K×r) und (K×L+MTU)/D, wenn nicht vorausschauendes Priority Queuing (PQ) verwendet wird
- max(L/D, K×r) und min(C, K×L/(D-MTU/C), wenn Class-based Weighted Fair Queuing (CB-WFQ) verwendet wird

wobei

- L die Paketlänge eines Sprache-über-IP-Datenpakets ist,
- r die Sprachcodiererrate auf der Internet-Protokoll-Schicht ist,
- C die Verbindungskapazität des IP-Netzwerks (IP-N) ist, und
- MTU die Maximum Transfer Unit der gehenden Leitung (0) ist.

**4.** Verfahren gemäß Anspruch 1, 2 oder 3,
wobei die berechnete Bandbreite für die Steuerung der Verbindungszulassung verwendet wird.

**Revendications**

**1.** Procédé de dimensionnement de la bande passante d'une ligne de sortie (0) d'un noeud dans un réseau voix sur IP (IP-N), comprenant les étapes suivantes :

(a) calcul d'un temps d'attente maximum des paquets à l'intérieur d'une mémoire tampon correspondant à différents pires cas au niveau du noeud (N1, ..., N4), les différents scenarii de pire cas dépendant de la constellation d'arrivées de paquets d'un nombre (K) de connexions vocales actives,
(b) définition d'un seuil de délai (D) pour le temps d'attente maximum,
(c) définition d'une probabilité (P) et
(d) dimensionnement de la bande passante de la ligne de sortie (0) du noeud de réseau de manière à ce que le seuil de délai (D) ne soit pas dépassé sauf dans des cas dont la survenue est aussi rare que la probabilité définie (P).

2.  Procédé selon la revendication 1, différents algorithmes de dimensionnement étant définis pour différents algorithmes d'ordonnancement (PQ, CB-WFQ).

3.  Procédé selon la revendication 1 ou 2, la bande passante étant comprise entre :

    - max($L/D$, $Kxr$) et $KxL/D$ si on utilise une mise en file d'attente prioritaire préemptive,
    - max($L/D$, $Kxr$) et $(KxL+MTU)/D$ si on utilise une mise en file d'attente prioritaire non-préemptive,
    - max($L/D$, $Kxr$) et $min (C, KxL/ (D-MTU/C) )$ si on utilise une mise en file d'attente équitable pondérée basée sur les classes de trafic,
    - L étant la longueur de paquet d'un paquet de voix sur IP,
    - r étant le débit de codeur vocal au niveau de la couche de protocole Internet,
    - C étant la capacité de vitesse de liaison du réseau IP (IP-N) et
    - MTU étant l'unité de transfert maximum de la ligne de sortie (O).

4.  Procédé selon la revendication 1, 2 ou 3, la bande passante calculée étant utilisée pour un contrôle d'admission des appels.

FIG 1

EP 1 471 694 B1

FIG 2

EP 1 471 694 B1

## FIG 3

## FIG 4

|  | Pre-emptive PQ | Non-preemptive PQ | CB-WFQ |
|---|---|---|---|
| Best case | $\max\left(\dfrac{L}{D}, K \times r\right)$ | $\max\left(\dfrac{L}{D}, K \times r\right)$ | $\max\left(\dfrac{L}{D}, K \times r\right)$ |
| (K-i)-packet worst case | $\max\left(\text{best case}, (K\text{-}i) \times \dfrac{L}{D}\right)$ | $\max\left(\text{best case}, \dfrac{(K\text{-}i) \times L + MTU}{D}\right)$ | $\min\left(C, \max\left(\text{best case}, \dfrac{(K\text{-}i) \times L}{D - \dfrac{MTU}{C}}\right)\right)$ |
| Worst case | $K \times \dfrac{L}{D}$ | $\dfrac{K \times L + MTU}{D}$ | $\min\left(C; \dfrac{K \times L}{D - \dfrac{MTU}{C}}\right)$ |

EP 1 471 694 B1

**EP 1 471 694 B1**

## REFERENCES CITED IN THE DESCRIPTION

### Patent documents cited in the description

- US 6266322 B1
- US 5883819 A